Europäisches Patentamt

European Patent Office

Office européen des brevets

(11) Publication number: **0 452 603 A1**

# EUROPEAN PATENT APPLICATION

(21) Application number: 90500070.9

(51) Int. Cl.5: **B01D 35/30**, B65D 45/02

(22) Date of filing: 20.07.90

(30) Priority: **18.04.90 ES 9001092**

(43) Date of publication of application:
**23.10.91 Bulletin 91/43**

(84) Designated Contracting States:
**DE FR GB GR IT**

(71) Applicant: **Garrigos Ruiz, Robert**
**de la Font, 1**
**E-17853 Tortella (Girona)(ES)**

(72) Inventor: **Garrigos Ruiz, Robert**
**de la Font, 1**
**E-17853 Tortella (Girona)(ES)**

(74) Representative: **Pastells Teixido, Manuel**
**c/o PASTELLS TEIXIDO, S.L. Pau Claris 138,**
**5-1a**
**E-08009 Barcelona(ES)**

(54) Device for closing pressurised vessels.

(57) This device comprises a lid (3) comprising an upper cover (4) supported around the mouth (2) of the vessel (1), a lower cover (5) axially associated with the first cover by a screw (6) attached to an upper rotating control (9) and an O-ring seal (10) which fits in a throat defined around respective concentric peripheral skirts (20) and (28) of the said covers, said O-ring seal being trapped, in the closed position of the lid (3), by operating said control (9) which presses the lower cover (5) against the upper cover (4). A generally T-shaped calibrated ring (12) is attached to the mouth (2) of the vessel (1) with the O-ring (10) being pressed between the skirt (20) of the upper cover (4) and the lower edge (17) of said ring (12) and the sloping skirt (28) of the lower cover (5).

This device is particularly used in sand filter vessels for water.

EP 0 452 603 A1

This invention relates to a device for closing pressurised vessels, particularly for vessels for sand filters for pressurised water, of the type used in swimming pools, in water purifiers, in certain types of irrigation, etc., as well as in the administration of products such as fertilizers, plaguicides or others, by dripping or spraying.

The said vessels are normally made from glass fibre reinforced polyester or stainless steel and the lids are domed and are attached conventionally thereto by a plurality of screws or nuts, with a sealing joint, whereby both the assembly and subsequent operation of the lid are laborious and time consuming.

Another known embodiment consists of using a domed lid with a peripheral flange bearing against a further external flange of the vessel mouth, with a resilient joint therebetween housed in respective grooves of said flanges, the lid being held in place by two grooved half rings hingedly connected together at one end and having a closing lever at the other. This process has the drawback that with the water pressure acting directly on the domed portion of the lid, this is opposed to the sealing function of the joint, thereby causing a deficient sealing.

To overcome the above drawbacks, it would be desirable to have a type of closing device which, while ensuring adequate efficiency in its function, should provide for quicker and more convenient handling, allowing at the same time the manufacturing costs to be reduced by a more simplified design.

The object of the invention is a device characterised in that it comprises a lid constituted by an upper cover forming a peripheral rim engagable around the vessel mouth on the outside thereof, a lower cover axially slidingly associated with the first cover, an external rotating control provided with a screw arrangement capable of raising and lowering the lower cover through the upper cover and an O-ring seal located between respective peripheral surfaces diverging from the contour of both covers defining a throat and which in the closing operation is compressed between said surfaces and expands to reach the inner edge of the vessel mouth.

According to the invention, the upper and lower covers are sliding assembled together along respective peripheral skirts, such that the skirt of the upper cover comprises a lower double walled fold surrounding the skirt of the lower cover, which fold is closed at the bottom end by external and internal sloping surfaces, while the said skirt of the lower cover forms a protruding sloping surface, terminating in a protruding rim, engaged by the inner sloping surface of the upper cover, forming between both members a throat to house the O-ring, in combination with the lower edge of the vessel mouth.

According to the invention, the vessel mouth is provided with an inner rim having the form of an inwardly folded lip.

When closing these devices there are sealing problems resulting mainly from two causes: irregularities in the charge mouth where the sealing gasket may not fit perfectly, which affects even low pressure vessels and by deformation of the sealing gasket in the higher pressure cases in which the gasket is deformed and allows a gap in its closure, which may even cause the lid to be blown off.

These problems are also solved in this invention, in a simple reliable way whereby the device in question contemplates the attachment of a calibrated ring in the vessel mouth against which the lid and its sealing joint fit, whereby, in view of the uniformity of said ring, the correct peripheral fit of the seal thereagainst is ensured.

This ring has a general inverted T-shaped section and is fixedly attached by the outer surface thereof to the periphery of the charge mouth, while the peripheral rim of the lid seats against the upper edge thereof and the sealing gasket is pressed against the lower inner edge of said ring.

For vessels having to withstand high pressures, the sealing gasket will be formed by an annular strip provided on the inner surface thereof with a peripheral expansion spring ensuring a tight seal and preventing the elastic recoil of the gasket.

This gasket has its upper and lower edges housed in respective slots of the facing peripheries of the upper cover and of the lower cover that form the lid.

These and other features will be better appreciated from the detailed description, to facilitate which there are provided five sheets of drawings in which practical embodiments cited only as a non-limiting example of the scope of the invention have been shown.

In the drawings:

Figure 1 is an elevation view of the upper portion of a vessel provided with the sealing device according to the invention,

Figure 2 is a plant view of the vessel of Figure 1,

Figure 3 is a diametral section view of the device of the invention, the left half showing the lid open and the right half the lid closed,

Figure 4 is a detail, in section, of the mounting zone between the upper and lower covers, in the open position of the lid,

Figure 5 is an elevation view in section of the device in question provided with the calibrated ring, the left half showing the cover open and the right half the cover closed,

Figure 6 also shows the device in elevation and in section, open and closed, with the lid provided with the spring loaded gasket, and

Figure 7 also shows said device in elevation section, open and closed, with the lid provided with the spring loaded gasket and with the calibrated ring.

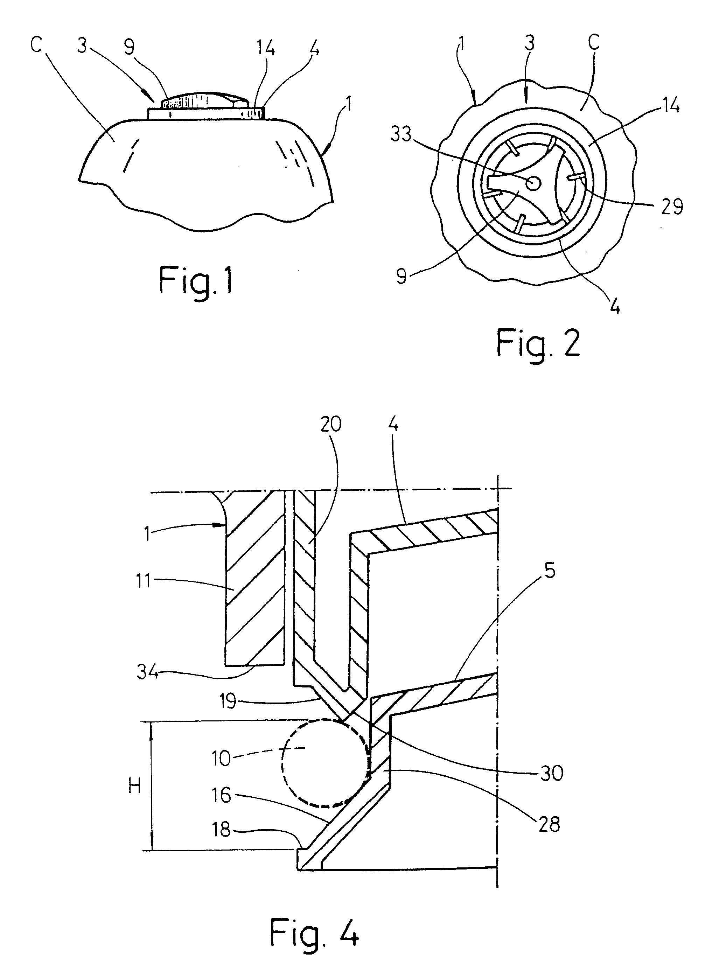

Figures 1 and 2 show the upper portion of a vessel 1 for a sand filter, comprising a casing c which in the upper portion thereof forms the corresponding charge mouth 2 to which a lid 3 of the device of the invention is applied.

The said lid, mounted in the charge mouth of the vessel 1, comprises an upper cover 4 and a lower cover 5 axially associated together by an axial screw 6 fixedly attached to the lower cover and which passes through the orifice 7 to the upper cover. A nut 8 fixedly attached to an external rotating control 9 is threaded on the screw and a resilient O-ring seal 10 is disposed between the peripheries of said two covers.

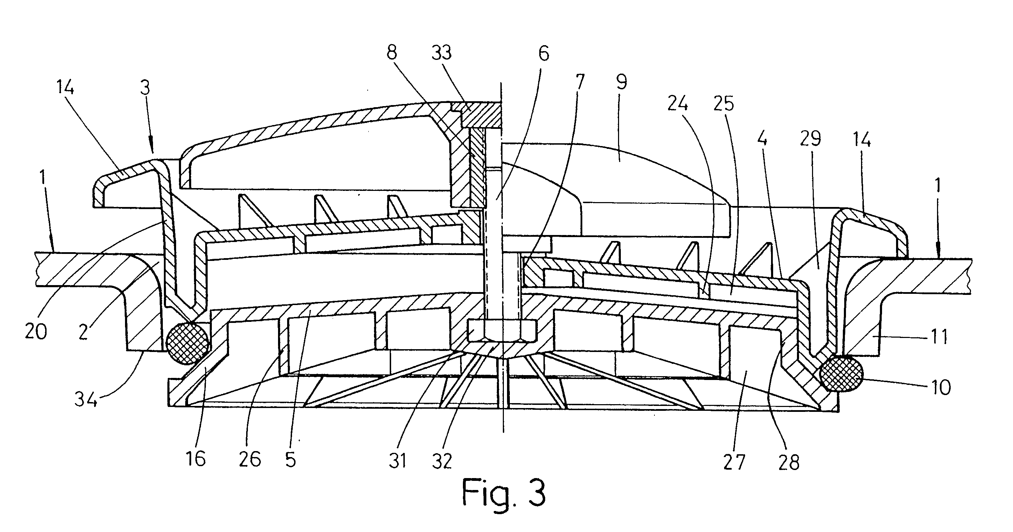

Figure 3 shows the relative positions of the members forming the lid which engages on the casing c of the vessel 1 which, in this case, forms a mouth having an inwardly folded rim 11.

The upper cover 4 is slightly tapering and is provided with reinforcement formed by internal annular ribs 24 and radial ribs 25, plus a recessed fold 20 formed by two mutually parallel walls joined together at the bottom end thereof and a bent terminal rim 14 which engages the upper portion of the vessel 1.

The lower cover 5 is also slightly tapering and is provided with annular ribs 26 and radial ribs 27 on the inner surface thereof and forms a peripheral skirt 28.

In the upper cover, the parallel walls of the fold 20 are attached together not only at the lower end, but also by radial walls 29 which also form a reinforcement.

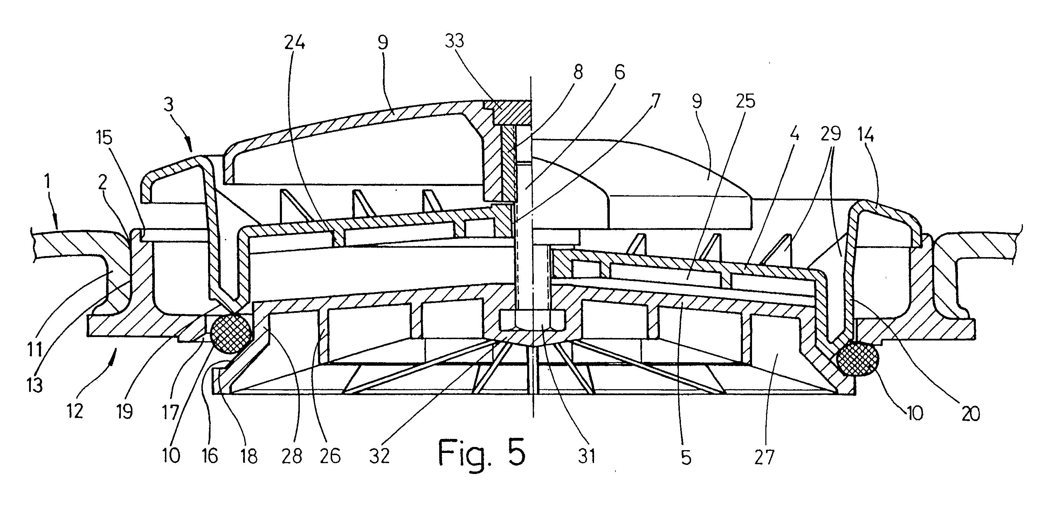

Figure 4 shows the assembly zone of the upper and lower covers 4 and 5, including the O-ring seal 10, such that the peripheral fold of the upper cover 4 terminates in internal 30 and external 19 sloping surfaces while the skirt 28 of the lower cover 5 forms a protruding sloping surface 16 terminating in an also protruding horizontal peripheral rim 18.

In figure 3 there is to be seen the relative position of the upper cover 4 and the lower cover 5 for closing and opening the lid, for which purpose the screw 6 associating them is provided with a head 31 fixed in a core 32 of the centre of the lower cover 5, which screw is threaded through the upper cover 4 in the upper control 9 provided with a threaded bushing 8, plus a shield 33 closing the orifice.

In a further case, not shown in the figures, the screw 6 may have its head attached to the upper control 9 and the lower portion may be engaged in a nut mounted in the lower cover 5, in which case it will be necessary to provide at the lower end of the screw a member preventing any possible separation of the nut caused by excessive rotation of said upper control 9.

The upper cover 4 and the lower cover 5 are seen to be separated in the left hand side of Figure 3, from which position, by operating the rotating control 9, the closed position shown in the other half of the figure is attained. In this case the sloping surface 16 of the lower cover 5 bears against the inner sloping surface 30 of the upper cover 4, whereby the O-ring seal 10 is trapped, on the one hand, between the surface 16 and the peripheral rim 18 of the lower cover 5 and, on the other hand, between the outer sloping surface 19 of the upper cover 4 and the lower edge 34 of the inwardly folded rim of the vessel 1.

Where the vessel 1 is not provided with the said inwardly folded rim 11 the height of the fold 20 of the upper cover 4 will be modified, without modififying the height H between the covers 4 and 5. In this case the O-ring seal 10 will engage the lower surface of the mouth of the vessel 1.

Among the advantages achieved by this device, there should be mentioned the fact that the internal pressure exerted by the water jet, from a tube, against the lower surface of the lower cover 5 acts favourably in the sense of trapping the O-ring seal 10, in other words, this seal is squeezed harder under the said inner pressure, unlike what happens in the known cases in which the said pressure operates in the opposite direction to the trapping effect. Another practical advantage consists of the fact that the handling of the lid is centred in the upper control 9 depending on the direction of rotation, instead of having several retaining members, like in the case of the existence of a number of screws around the lid. Furthermore, with the bottom of the lower cover 5 forming a cavity, the said water jet inside the vessel spreads out over the surface of the filter sand, thereby improving the filtering action and preventing said sand from forming piles because of a concentrated impact.

If the inwardly folded rim 11 forming the mouth 2 is irregular, a uniform ring 12 (figure 5) of injected plastic materials having an inverted T-shaped section will be attached thereto, the outer surface 13 of this ring being engaged against the periphery of said rim 11.

When closing the lid, the peripheral rim 14 of the upper cover engages a shoulder 15 of the upper edge of the ring 12 and the O-ring seal 10 is pressed, by the sloping peripheral surface 16 of the lower cover, against the sloping surface 17 of the inner lower edge of the said ring.

As seen in the right hand side of Figure 5, the O-ring seal 10 is pressed against the sloping surface 17, the sloping surface 16 terminated in the horizontal surface 18, and the sloping surface 19 formed on the lower fold 20 forming the upper cover 4.

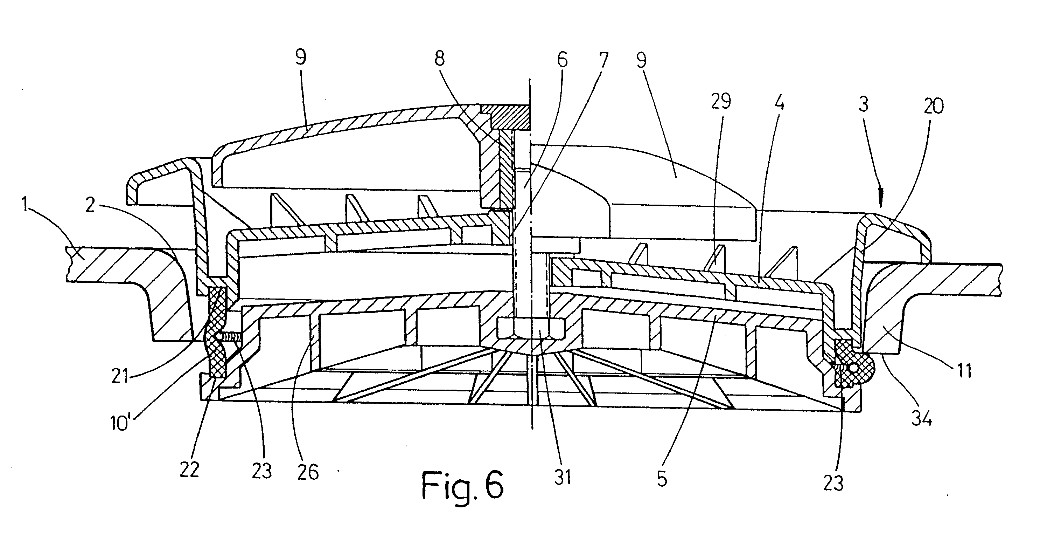

Where the vessel 1 is to undergo high internal pressures, the seal will be formed by an elastic strip 10' (Figure 6) placed edge-on between the facing peripheries of the upper cover 4 and the lower cover 5 for which purpose these are provided with respective annular slots 21 and 22 where the upper and lower edges of said strip respectively engage.

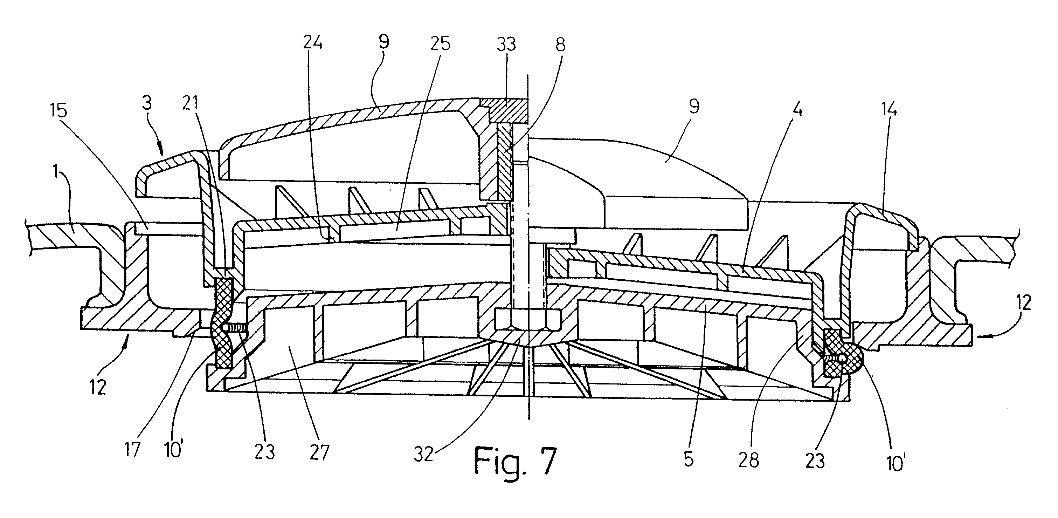

An annular coil spring 23 is housed on the inner surface of the strip and works by expansion, so that when the vessel is closed it holds the seal in its pressed position against the inner lower edge of the inwardly folded rim 11 of the vessel mouth, or the ring 12 fixedly attached to said mouth (Figure 7).

**Claims**

1. A device for closing pressurised vessels, characterized in that it comprises a lid (3) constituted by an upper cover (4) forming a protruding peripheral ring (14) engagable against the vessel (1) around the mouth (2) thereof, a lower cover (5) axially slidingly associated with the former, an external central control (9) rotatingly operating and provided with a screw arrangement (6) capable of raising and lowering the lower cover (5) and an O-ring seal (10) situated between respective diverging peripheral surfaces (16) and (19) of the contour of both covers defining a throat, and which in the closed operation is compressed between said surfaces, by raising of the lower cover (5) and expands to extend below the lower edge (34) of the vessel mouth.

2. A device for closing pressurised vessels, according to claim 1, characterized in that the upper cover (4) and the lower cover (5) are slidingly assembled together along respective peripheral skirts, such that the skirt of the upper cover forms a lower fold (20) having a double wall and surrounding the skirt (28) of the lower cover (5), which fold is closed at the bottom end by external (19) and internal (30) sloping surfaces, while the skirt of the lower cover (5) forms a protruding sloping surface (16) terminating in a peripheral rim (18), with which there engages the inner sloping surface (30) of the upper cover (4) determining between both members the throat housing the O-ring seal (10).

3. A device for closing pressure vessels, according to claim 1, characterized in that the mouth (2) of the vessel (1) is provided with a lower rim forming an inwardly folded lip (11).

4. A device for closing pressurised vessels, according to claim 1, characterized in that in the mouth (2) of the vessel (1) there is fixedly attached a calibrated ring (12) generally of inverted T-shaped section, which is attached by the outer surface (13) of said ring against the periphery of mouth (2) of the vessel (1), with the upper peripheral rim (14) of the upper cover (4) seating on the upper edge of said ring, with the seal (10) being pressed against the inner lower edge of the said ring (12).

5. A device for closing pressurised vessels, according to claim 4, characterized in that the ring (12) is provided on the upper edge thereof with a shoulder (15) against which there engages the rim (14) of the upper cover (4) and the inner lower edge of said ring is provided with a sloping surface (17) against which the seal is pressed.

6. A device for closing pressurized vessels, according to claim 1, characterized in that the sealing gasket is formed by an annular strip (10'), which is provided on the inner surface thereof with a peripheral expansion spring (23) ensuring a tight seal.

7. A device for closing pressurised vessels, according to claim 6, characterized in that the upper cover (4) and the lower cover (5) forming the lid (3) are provided on the facing peripheral portions with respective grooves (21) and (22) in which the upper and lower edges of the strip (10') forming the seal are housed.

Fig.1

Fig. 2

Fig. 4

Fig. 3

Fig. 5

EP 0 452 603 A1

Fig.6

Fig. 7

**European Patent Office**

**EUROPEAN SEARCH REPORT**

Application Number

**EP 90 50 0070**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | ES-A-2 009 658 (POLTANK)<br>* column 1, lines 1 - 2; figures 1-5 *<br>— — — | 1-3 | B 01 D 35/30<br>B 65 D 45/02 |
| A | US-A-4 659 466 (FARR ET AL.)<br>* abstract; figure 1 *<br>— — — | 1 | |
| A | CH-A-2 496 11 (KNECHT)<br>* page 1, left-hand column, paragraph 1; figure 1 *<br>— — — | 1,3 | |
| A | DE-C-3 864 39 (FRANKENBUSCH)<br>* figure 1 *<br>— — — — — | 1,3 | |

TECHNICAL FIELDS
SEARCHED (Int. Cl.5)

B 01 D
B 65 D

The present search report has been drawn up for all claims

| Place of search | Date of completion of search | Examiner |
|---|---|---|
| Berlin | 26 July 91 | SPETTEL J D M L |